# EUROPEAN PATENT APPLICATION

(11) **EP 4 647 597 A1**
(43) Date of publication of application: **12.11.2025**
(21) Application number: 24174272.5
(22) Date of filing: 06.05.2024
(51) Int. Cl.: F03D 17/00

(54) **METHOD OF MONITORING A WIND TURBINE ROTOR BLADE PITCH SYSTEM**

(71) Applicant: Siemens Gamesa Renewable Energy A/S, 7330 Brande (DK)
(72) Inventor: Brill, Anthony, Longmont, 80504 (US); Sheider, Jonathan, Lake City, 32024 (US)
(74) Representative: SGRE-Association

(57) **Abstract**

The invention describes a method of monitoring the pitch system (11) of a wind turbine rotor blade (10), which method comprises receiving a series of reference pitch positions (RP) during a pitch manoeuvre; monitoring the actual pitch position (MP) of the rotor blade (10) during actuation of the pitch system (11); and determining the pitch actuator delay (Δ_{M}) on the basis of the received reference pitch positions (RP) and the monitored actual pitch positions (MP). The invention further describes a pitch system (11) of a wind turbine rotor blade (10), comprising a monitoring unit (11M) configured to determine the actuator delay (Δ_{M}) of that pitch system (11). The invention further describes a wind turbine (1) comprising a control arrangement (1C, 11C) configured to implement the inventive method.

## Description

### Background

The rotational speed of the aerodynamic rotor of a wind turbine can be adjusted by changing the pitch positions of the rotor blades. To this end, each rotor blade is mounted to a hub at the front of the wind turbine by means of pitch system comprising an essentially circular pitch ring, an actuator that can turn the rotor blade about its longitudinal axis, and a pitch controller. A wind turbine controller issues a pitch reference as appropriate, and the pitch controller causes the pitch system actuator to "follow" the pitch reference. In older wind turbines, the rotor blades were pitched collectively, but it is usual in modern wind turbines to perform individual pitch control of the rotor blades.

The delay or lag in the response of the pitch system - i.e. the time that elapses between receiving a pitch reference and turning the rotor blade to the intended position - can have a significant impact on wind turbine loads. This delay or lag can be referred to as the pitch system response delay. During the design phase of a wind turbine, it is usual to identify an optimal pitch system response delay, i.e. a response time that is neither too short nor too long. The pitch system response delay is determined by the hardware components of the pitch system and also by the design-phase servo controller tuning, and can be referred to herein as the "specification delay".

Various algorithms implemented by the wind turbine controller will take the specification delay into account, i.e. the specification delay is generally "hardwired" into the relevant wind turbine control algorithms. For example, using a constant delay pitch model, the pitch position of a rotor blade can be deduced by the wind turbine controller on the basis of the previous reference pitch position, to which is added the constant specification delay.

This is a reasonable approach to wind turbine control as long as the pitch system response delay remains constant (i.e. does not deviate from the specification delay) over the service life of the wind turbine. However, changes in the pitch actuator delay are essentially unavoidable. For example, the pitch actuator delay can change as a result of: a fault in a pitch actuator component (e.g. a valve fails to close), incorrect choice of a replacement part in a maintenance procedure, insufficient capacity to pitch against high rotor blade loads, a pitch bearing fault; pitch tracking errors, etc. In such situations, the actual pitch position of a rotor blade may differ significantly from the deduced pitch position.

A problem with the known approach is that even a small departure from the specification actuator delay can lead to an undesirable increase in wind turbine loads and can result in damage to various components of the wind turbine.

It is therefore an object of the invention to provide a means of monitoring the pitch system of a wind turbine rotor blade.

This object is achieved by the claimed method of monitoring a wind turbine rotor blade pitch system and by the claimed wind turbine rotor blade pitch system .

### Description

According to the invention, the method of monitoring the pitch system of a wind turbine rotor blade comprises steps of receiving reference pitch positions at successive time instants during actuation of the pitch system towards a target pitch position; monitoring the actual pitch position of the rotor blade during actuation of the pitch system; and determining the momentary pitch actuator delay of that pitch system on the basis of the received reference pitch positions and the monitored actual pitch positions.

The inventive pitch system of a wind turbine rotor blade comprises a pitch actuator arranged to effect a rotary displacement of the rotor blade about its long axis, and a pitch controller configured to perform the steps of the inventive method. To this end, the pitch controller of the inventive pitch system comprises a means of receiving reference pitch positions at successive time instants during actuation of that pitch system; a means of monitoring the actual pitch position of that rotor blade during actuation of the pitch system; and a monitoring unit configured to determine the actuator delay of that pitch system on the basis of the received reference pitch positions and the monitored actual pitch positions. The monitoring unit can make use of already existing modules of the pitch controller, for example a pitch controller may already comprise an interface for receiving the reference pitch positions and a means of establishing the momentary rotor blade pitch position on the basis of feedback from the pitch actuator.

An advantage of the invention is that it provides a straightforward way of identifying a potentially problematic situation which might otherwise lead to damage to components of the wind turbine. The invention can be implemented in a wind turbine without requiring any alterations to the existing pitch system hardware.

The object of the invention is also achieved by a computer program product with a computer program that is directly loadable into the memory of a control unit (e.g. a memory of the pitch controller and/or a memory of the wind turbine controller), and which comprises program units to perform the steps of the inventive method when the program is executed by the control unit(s). A realisation largely in the form of software modules can have the advantage that applications already installed on an existing system can be updated with relatively little effort to implement the invention.

Particularly advantageous embodiments and features of the invention are given by the dependent claims, as revealed in the following description. Features of different claim categories may be combined as appropriate to give further embodiments not described herein.

In the following, it may be assumed that a wind turbine comprises three rotor blades mounted to a hub, and three pitch systems, each arranged between a rotor blade and the hub and each comprising a pitch controller. The wind turbine may comprise one or more instances of the inventive pitch system. In a particularly preferred embodiment of the invention, each rotor blade is equipped with an instance of the inventive pitch system.

As explained above, the pitch actuator delay determined during the design phase of a wind turbine's pitch system can be referred to in the following as the "specification delay". Similarly, a momentary or actual pitch actuator delay of that pitch system, as observed in real time during operation of the wind turbine, can be referred to in the following as the "measured delay" or "observed delay".

The momentary actuator delay of the pitch system can be determined in a number of ways. For example, the momentary actuator delay could be calculated on the basis of a suitable algorithm, for example a cross-correlation function of the pitch reference and pitch position over a certain time.

In a particularly preferred embodiment of the invention, the inventive method comprises a step of directly or indirectly computing the pitch speed, and wherein the observed delay is determined on the basis of the pitch speed. Here, the term "pitch speed" shall be understood as the rate at which the rotor blade turns about its longitudinal axis and can be expressed in terms of angular degrees per second or an equivalent expression.

In a preferred embodiment of the invention, the pitch speed is computed from the received reference pitch positions, and corresponding time instances. For example, a pitch reference issued by the wind turbine controller can comprise an angular quantity (e.g. +0.1°) and a timestamp (e.g. the time at which the reference is issued). Equally, a pitch reference can simply comprise an angular quantity, and the pitch controller can note the time instant at which the pitch reference is received (it can be assumed that such a controller generally comprises a system clock or is provided with a system clock signal).

In a preferred embodiment of the invention, the step of monitoring the actual pitch position comprises measuring the relative displacement of a pitch system actuator and deducing the actual rotor blade pitch position on the basis of the measured relative displacement. As the skilled person will be aware, the relationship between the pitch system and the rotor blade is well-defined in the wind turbine design phase, i.e. the relationship between displacement of the pitch actuator and rotation of the rotor blade is known to the pitch controller. For example, the pitch actuator can be a hydraulic cylinder, and a sensor such as a linear magnetostrictive sensor can be arranged inside or on the cylinder to measure its relative displacement (e.g. relative to a calibration position as will be known to the skilled person). As the cylinder extends and retracts, the sensor reports the relative displacement to the pitch controller. Any linear movement of the cylinder results in a corresponding rotational motion of the rotor blade about its long axis. Using the known geometrical relationship between the pitch cylinder and the rotor blade, a measured relative displacement of the cylinder can be converted into the actual rotor blade pitch angle, i.e. the current or observed pitch position of the rotor blade.

In the inventive approach, the observed delay of a pitch system is monitored in real-time, i.e. the pitch actuator delay is continuously being computed while the rotor blade is being pitched about its rotational axis. The pitch reference describes the desired pitch angle, and the observed delay is the time by which the actual turning motion of the rotor blade lags behind the pitch reference.

As indicated above, a particularly preferred approach is to deduce the pitch speed from the received pitch references to establish a virtual pitch reference curve, and then to deduce the time lag between an observed pitch position and a corresponding point on the virtual pitch reference curve.

The observed time lag or observed delay of a pitch system is then used by the wind turbine controller in subsequent control of the wind turbine. As long as the observed delay of a pitch system is close to the specification delay, i.e. within an acceptable tolerance, the wind turbine controller can assume that the pitch system is functioning normally. However, if the observed delay of any one of the pitch systems exceeds the acceptable tolerance, the wind turbine controller may respond by shutting the wind turbine down.

In a further preferred embodiment of the invention, the length of time in which a pitch actuator delay exceeds the specification delay is also observed and evaluated. As explained above, an acceptable "window" can be defined by a permitted deviation beyond the specification delay (e.g. an additional 100 ms), but the accumulated length of time in which the pitch actuator delay is allowed to spend in this window may be limited. If the observed pitch actuator delay remains in this window for longer than a permitted time threshold, the wind turbine controller may interpret this as a pitch system fault. For example, when the observed delay exceeds a certain threshold, a counter can commence recording or "accumulating" the elapsed time. When the elapsed time exceeds a certain threshold, an alarm can be triggered. In an exemplary situation, a delay threshold is 400 ms, and a corresponding time threshold is 5 s. If the observed delay reaches or exceeds 400 ms for longer than 5 s, an alarm can be triggered. In a preferred embodiment of the invention, the monitoring unit can apply several combinations of delay thresholds and time thresholds, chosen to be representative of various pitch system failure modes. In one embodiment, the monitoring unit may apply a set of thresholds to assist in identifying more severe faults, for example a larger delay threshold (e.g. 700 ms) in combination with a shorter time threshold (e.g. 1 s). If these thresholds are reached, the monitoring unit will react faster to the potentially faulty situation by issuing a more severe alarm, since the underlying cause is likely an acute failure in the pitch system, and the wind turbine controller may respond by initiating a shutdown procedure.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a schematic representation of a wind turbine with three pitchable rotor blades;
Figure 2 shows a wind turbine rotor blade and an embodiment of the inventive pitch system
Figures 3 - 8 illustrate steps of the inventive method.

In the diagrams, like numbers refer to like objects throughout. Objects in the diagrams are not necessarily drawn to scale.

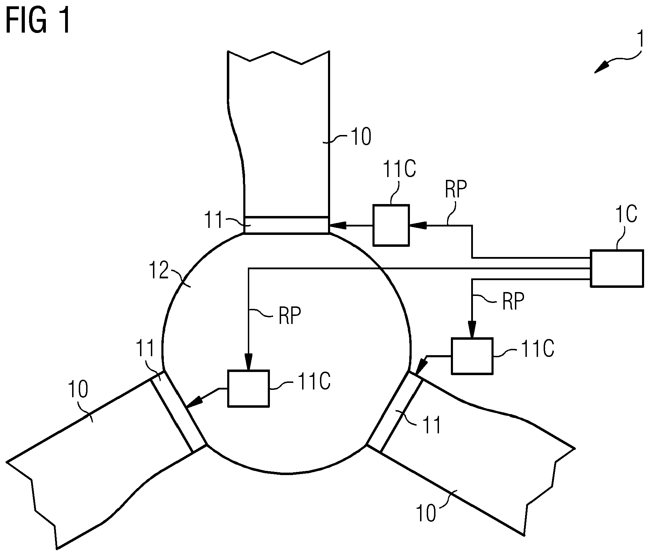

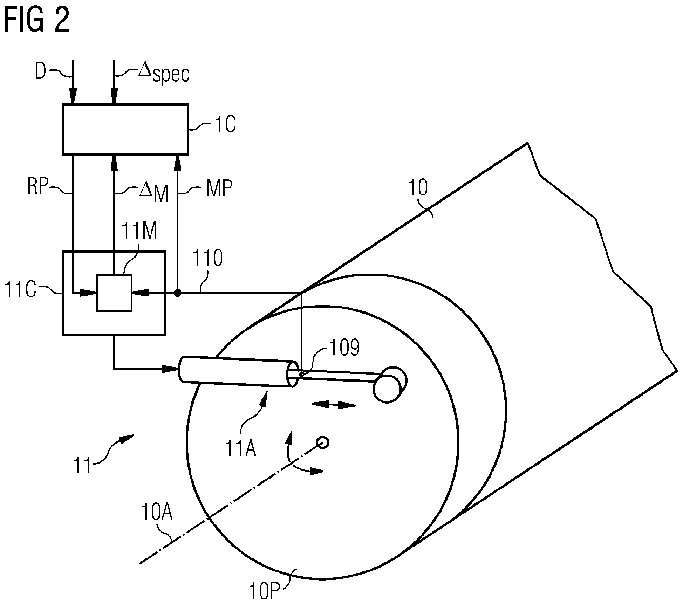

Figure 1 and Figure 2 showing relevant aspects of a wind turbine configured to carry out the invention. The wind turbine 1 of Figure 1 indicates three rotor blades 10, each with its own pitch system 11. Each pitch system 11 comprises an essentially circular interface between the rotor blade root end and the hub 12, with a bearing and an actuator 11A configured to turn the rotor blade 10 about its longitudinal axis 10A as indicated in Figure 2. In this exemplary embodiment, each rotor blade 10 can be independently pitched, and to this end each pitch system 11 has its own pitch controller 11C. A wind turbine controller 1C issues pitch references RP as appropriate to the pitch controllers 11C. A pitch system can implement any suitable type of actuator, for example the pitch system may comprise a ring gear about its circumference, and an electric motor arranged to turn a pinion to result in a rotational displacement of the ring gear (and the rotor blade).

In the exemplary pitch system 11 of Figure 2, the pitch actuator 11A is a hydraulic cylinder attached to a circular reinforcing plate 10P of the rotor blade 10. The reinforcing plate 10P is usually bolted to the circular root end of the rotor blade 10. A linear displacement of the cylinder 11A causes the reinforcing plate 10P (and the rotor blade 10) to turn by a corresponding amount about the longitudinal axis 10A as indicated by the arrows. The diagram indicates a pitch controller 11C configured to receive a reference pitch position RP from the wind turbine controller 1C and to convert the reference pitch position RP into appropriate actuator control signals.

The diagram also shows a sensor 10S arranged (e.g. inside the pitch cylinder) to report the actuator displacement 110. Since the relationship between actuator displacement and rotational position of the reinforcing plate is clearly defined, the sensor signal 110 can be used to deduce the actual pitch position of the rotor blade. In this exemplary embodiment, the sensor is a linear magnetostrictive sensor 10S arranged to track the linear displacement of the pitch cylinder 10A.

The actual pitch position of a rotor blade can be expressed in terms of a fixed reference such as the zero degree calibration angle, as will be known to the skilled person, e.g. +5° relative to the 0° calibration angle, -3.5° relative to 0°, etc.

The diagram shows information transfer between the wind turbine controller 1C and the pitch controller 11C. Here, the inventive pitch controller 11C includes a monitoring unit 11M, which receives the sensor output 110 (i.e. the relative displacement of the actuator 11A) and also the reference pitch positions RP from the wind turbine controller 1C. The monitoring unit 11M uses its input information to observe the actual pitch actuator delay Δ_{M} of that pitch system 11 using the inventive method. The wind turbine controller 1C can then compare the actual pitch actuator delay Δ_{M} with the specification pitch actuator delay A_{spec} established during the design phase of that wind turbine.

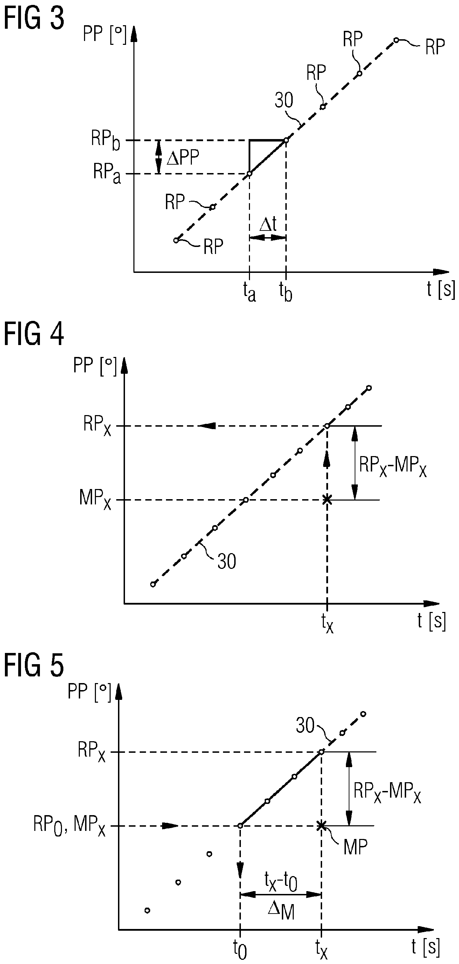

Steps of an exemplary embodiment of the inventive method (which can be implemented in the form of a computer algorithm) are illustrated schematically in Figures 3 - 5. The diagrams shows graphs of pitch position PP (in degrees) against time (in seconds). Figure 3 shows an exemplary "plot" with a series of reference pitch positions, received at intervals from the wind turbine controller 1C. The diagram only shows a "snapshot" during a pitch manoeuvre, and it shall be understood that any number of reference pitch positions can precede and follow the subset shown here. Each reference pitch position is indicated as a point defined by a quantity (i.e. degrees relative to the zero pitch position) and a time (time elapsed since last reference pitch position). For simplicity, the "fitted line" shown here extends through the origin. In the inventive method, the reference pitch speed (the rate of change of the reference pitch positions) is computed, and can be visualized as the slope of the fitted line so that, from the straight line equation y = mx and using any two reference pitch positions (tₐ, RPₐ; t_{b}, RP_{b}), the slope m or reference pitch speed is determined to be ΔPP/Δt. The pitch controller can continually update this value as reference pitch positions are received. In an exemplary embodiment, the pitch references can define steps of 0.2° and can be issued at regular intervals of 100 ms, so that the reference pitch speed is 2° per second. Even in a healthy pitch system, the actual pitch speed (the rate at which the pitch actuator turns the rotor blade) can differ slightly from the reference pitch speed. The inventive approach can favourably detect situations in which a pitch actuator delay increases beyond a permitted bound due to a fault that causes the actual pitch speed to be significantly slower than the reference pitch speed.

During the pitch manoeuvre, the pitch actuator delay means that, at any instant in time, the actual or measured pitch position lags behind the reference pitch position for that time instant. Figure 4 shows an exemplary measured pitch position obtained using the sensor output 110, defined by an X-coordinate tₓ and a Y-coordinate MPₓ. From the previously received reference pitch data 30, it is possible to infer the intended or ideal pitch position RPₓ at that time tₓ. The difference between these values RPₓ, MPₓ is the momentary pitch error. As shown in Figure 5, from the previously established slope m (i.e. pitch speed, where m = ΔPP/Δt) and observing that at any time tₓ, the momentary actuator delay ΔM can be determined by dividing the observed pitch error (RPx - MPx) by the computed pitch speed m.

Alternatively, the reference pitch positions received at intervals from the wind turbine controller 1C can be used to determine a fitted line as explained above. Using the X-axis difference between consecutive time instances and the Y-axis difference between corresponding pitch references, the slope of the fitted line can be determined The slope corresponds to the pitch speed, in this case 2° per second. This information can be used to arrive at the momentary pitch actuator delay Δ_{M} of that pitch system: using the sensor output 110, the "measured" or momentary pitch position MP is obtained at a certain time instant (e.g. at time tₓ). A point on the previously determined fitted line with the same Y-coordinate RPₒ is determined. The corresponding X-coordinate t₀ is determined. The time difference (tₓ - t₀) is the momentary actuator delay Δ_{M} of that pitch system.

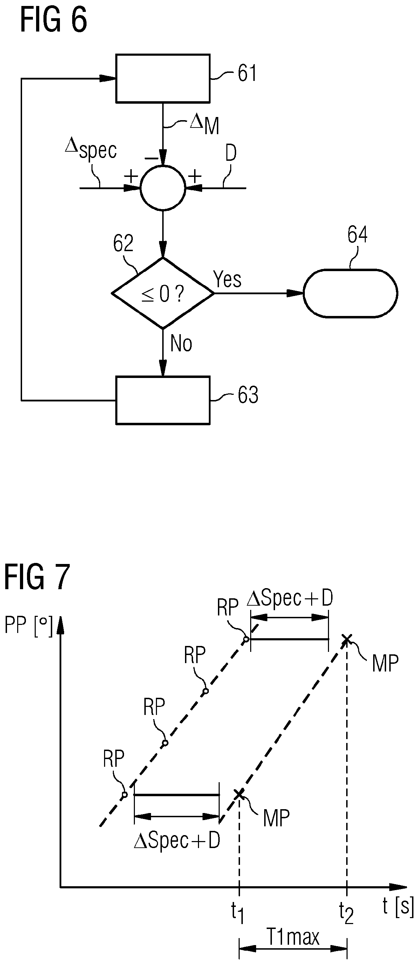

In a fault-free pitch system, i.e. a pitch system in which all components are functioning as designed, the time difference Δ_{M} will essentially correspond to the specification delay A_{spec} determined during the design stage. However, as explained above, an increase in the pitch actuator delay is likely at some point during the service life of the wind turbine owing to wear and tear, faulty components, etc. Equally, the pitch actuator delay can decrease as a result of various fault conditions. The inventive method provides a straightforward and reliable way of identifying pitch system faults by identifying any discrepancy between the specification delay A_{spec} and the actual delay Δ_{M}, and the wind turbine controller 1C can then respond as appropriate. Figure 6 is an exemplary flow chart to illustrate this aspect of the invention. In a first step 61, the momentary actuator delay Δ_{M} of a pitch system is computed and passed to the wind turbine controller 1C. The momentary actuator delay Δ_{M} is compared in step 62 to the specification delay Δ_{spec}. If the momentary actuator delay Δ_{M} does not exceed the specification delay Δ_{spec} by more than a permitted threshold D, the wind turbine controller 1C proceeds with normal control 63 of the wind turbine. If the momentary actuator delay Δ_{M} exceeds the specification delay Δ_{spec} by more than the permitted threshold D, the wind turbine controller 1C can initiate a shutdown procedure 64 so that the corresponding pitch system 11 can be inspected, and to avoid damage to the wind turbine 1.

For example, the specification delay A_{spec} of each pitch system of a wind turbine may be 400 ms, and the permitted deviation D may by 100 ms, in other words an observed pitch actuator delay Δ_{M} is allowed to reach 500 ms. The shutdown deviation for each pitch system 11 of that wind turbine 1 is set at 200 ms, in other words the wind turbine 1 will be shut down if an observed delay Δ_{M} reaches 600 ms.

In another example, as illustrated in Figure 7, more attention is paid to the length of time in which a pitch actuator delay Δ_{M} exceeds a delay threshold. Again, an acceptable delay threshold Dimax can comprise a suitable tolerance D above the specification delay Δ_{spec}. The observed pitch actuator delay Δ_{M} of a pitch system may enter this "window" for a brief time without requiring action by the wind turbine controller 1C. However, if the observed pitch actuator delay Δ_{M} remains in this window for too long, thereby exceeding a time threshold T1max, the wind turbine controller 1C can be informed of a potential fault.

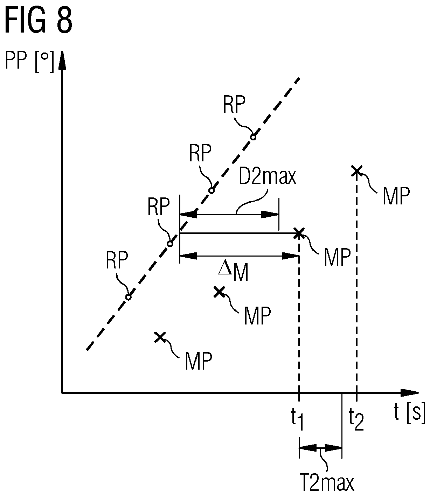

The monitoring unit 11M can apply various combinations of delay threshold and time threshold. As illustrated in Figure 8, if the observed pitch actuator delay Δ_{M} exceeds a large delay threshold D2max for more than a relatively short time threshold T2max as indicated here, a serious fault may be assumed and the monitoring unit 11M can issue a suitably severe alarm to the wind turbine controller 1C, which may respond by shutting down the wind turbine.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A method of monitoring the pitch system (11) of a wind turbine rotor blade (10), which method comprises
- receiving a series of reference pitch positions (RP) during a pitch manoeuvre;
- monitoring the actual pitch position (MP) of the rotor blade (10) during actuation of the pitch system (11); and
- determining the pitch actuator delay (Δ_{M}) on the basis of the received reference pitch positions (RP) and the monitored actual pitch positions (MP).

2. A method according to the preceding claim, comprising a step of computing a reference pitch speed, and wherein the pitch actuator delay (Δ_{M}) is determined on the basis of the reference pitch speed.

3. A method according to any of the preceding claims, wherein the pitch actuator delay (Δ_{M}) is determined on the basis of a cross-correlation between a reference pitch position (RP) and a measured pitch position (MP).

4. A method according to any of the preceding claims, comprising a step of comparing the pitch actuator delay (Δ_{M}) to a specification pitch actuator delay (Δ_{spec}) for that pitch system (11).

5. A method according to the preceding claim, comprising a step of issuing an alarm when the pitch actuator delay (Δ_{M}) exceeds the specification pitch actuator delay (Δ_{spec}) by a permitted amount (D).

6. A method according to the preceding claim, comprising a step of issuing an alarm when the pitch actuator delay (Δ_{M}) exceeds a permitted delay threshold (D2max) for longer than a permitted time threshold (T2max).

7. A pitch system (11) of a wind turbine rotor blade (10), comprising
- a pitch actuator (11A) arranged to effect a rotary displacement of the rotor blade (10) about its long axis (10A);
- a means of receiving successive reference pitch positions (RP) during a pitch manoeuvre;
- a means of monitoring the actual pitch position (MP) of that rotor blade (10) during the pitch manoeuvre; and
- a monitoring unit (11M) configured to determine the actuator delay (Δ_{M}) of that pitch system (11) on the basis of the received reference pitch positions (RP) and the monitored actual pitch positions (MP).

8. A pitch system according to claim 7, wherein the actual pitch position (MP) of that rotor blade (10) is determined on the basis of a known relationship between a relative displacement of the pitch actuator (11A) and a rotary displacement of the rotor blade (10) about its longitudinal axis (10A).

9. A pitch system according to any of claims 7 to 8, wherein the pitch actuator (11A) is a hydraulic cylinder.

10. A wind turbine (1) comprising
- a plurality of pitchable rotor blades (10) mounted to a hub (12);
- at least one embodiment of the pitch system (11) according to any of claims 7 to 9 arranged between a rotor blade (10) and the hub (12); and
- a control arrangement (1C, 11C) configured to implement the method according to any of claims 1 to 6.

11. A wind turbine according to the preceding claim, comprising a pitch system (11) according to any of claims 7 to 9 arranged between each rotor blade (10) and the hub (12).

12. A wind turbine according to claim 10 or claim 11, wherein the control arrangement (1C, 11C) is configured to regulate operation of the wind turbine (1) on the basis of the actuator delay (Δ_{M}) reported by the monitoring unit (11M) of a pitch system (11).

13. A wind turbine according to any of claims 10 to 12, wherein the control arrangement (1C, 11C) is configured to issue an alarm when a reported pitch actuator delay (Δ_{M}) exceeds a predetermined threshold (D1max, D2max).

14. A wind turbine according to any of claims 10 to 13, wherein the control arrangement (1C, 11C) is configured to shut down the wind turbine (1) when the pitch actuator delay (Δ_{M}) exceeds a permitted delay threshold (D2max) for longer than a permitted time threshold (T2max).

15. A computer program product for carrying out the steps of the method according to any of claims 1 to 6, when the computer program product is loaded into a memory of a programmable device of a control arrangement (1C, 11C).
